# EUROPEAN PATENT SPECIFICATION

(11) **EP 2 764 523 B1**
(45) Date of publication and mention of the grant of the patent: **23.10.2019**
(21) Application number: 12839032.5
(22) Date of filing: 10.09.2012
(51) Int. Cl.: H01F 38/14

(54) **A TRANSMITTER FOR AN INDUCTIVE POWER TRANSFER SYSTEM**
SENDER FÜR EIN INDUKTIVES ENERGIEÜBERTRAGUNGSSYSTEM
ÉMETTEUR DESTINÉ À UN SYSTÈME DE TRANSFERT DE PUISSANCE INDUCTIF

(30) Priority: 07.10.2011 NZ 59563611; 25.04.2012 US 201261637864 P
(43) Date of publication of application: 13.08.2014
(73) Proprietor: Apple Inc., Cupertino CA 95014 (US)
(72) Inventor: LI, Hao, Cupertino, CA 95014 (US)
(74) Representative: Barnfather, Karl Jon
(86) International application number: PCT/NZ2012/000163
(87) International publication number: WO 2013/051947

(56) References cited:
- EP-A1- 2 161 811
- WO-A1-2010/127685
- DE-A1- 10 218 124
- GB-A- 2 388 716
- JP-A- H04 317 527
- JP-A- 2001 190 029
- US-A1- 2009 230 777
- CASANOVA J. J. ET AL.: 'Transmitting Coil Achieving Uniform Magnetic Field Distribution for Planar Wireless Power Transfer System' IEEE RADIO AND WIRELESS SYMPOSIUM, 2009. RWS '09 pages 530 - 533, XP031457461
- YU X. ET AL.: 'Watt-Level Wireless Power Transfer Based on Stacked Flex Circuit Technology' IEEE ELECTRONIC COMPONENTS AND TECHNOLOGY 61 ST CONFERENCE (ECTC), 2011 31 May 2011, pages 2185 - 2191, XP031996847

## Description

### FIELD OF THE INVENTION

The present invention is in the field of an inductive power transfer (IPT) system. More particularly, the invention relates to a power transmitter - having a novel configuration - for use in such systems.

### BACKGROUND OF THE INVENTION

IPT systems are a well known area of established technology (for example, wireless charging of electric toothbrushes) and developing technology (for example, wireless charging of handheld devices on a 'charging mat'). Typically, a primary side generates a time-varying magnetic field from a transmitting coil or coils. This magnetic field induces an alternating current in a suitable receiving coil that can then be used to charge a battery, or power a device or other load. In some instances, it is possible for the transmitter or the receiver coils to be connected with capacitors to create a resonant circuit, which can increase power throughput and efficiency at the corresponding resonant frequency.

A basic problem that must be overcome in IPT system design is ensuring efficient power transfer. One approach to improve performance has been to require precise alignment of the transmitter and receiver coils, such as in the case of wireless charging of electric toothbrushes that use a dedicated charging mount. However, requiring precise alignment undermines one of the key objectives of some IPT systems, which is uncomplicated charging and powering of devices, with minimal user participation.

Another type of IPT system is a charging (or powering) pad. Typically, these systems provide a surface that is configured to produce a magnetic field such that when a suitable device is placed on the surface, power is drawn by a suitable receiver coil arrangement within the device. There are various transmitting coil configurations that are known. In one example, a single coil is placed beneath, and coplanar to, the surface. The coil might be small, and thus the receiver coil must still be reasonably well aligned to achieve power transfer. Alternatively, the coil might be large, covering the entire area of the surface. In this instance, one or more receivers can be placed anywhere on the surface. This allows more freedom in terms of charging or powering a device (ie a user only has to set the device down anywhere on the mat). However, the magnetic field produced by such a configuration is not uniform, and can be particularly weaker towards the centre of the coil. Therefore, receiver coils derive different amounts of power depending on their location on the surface.

A third type of IPT system is a charging (or powering) enclosure. Typically, these systems provide a box with transmitter coils incorporated into the wall and or base of the box. The coils generate a magnetic field within the box, such that when a device is placed within the box, power is drawn by a suitable receiver coil arrangement within the device. The coils could be an array of coils, or a large coil, or a combination both. However, the same disadvantages as with a charging pad can arise. That is, the field is not uniform throughout the volume, being particularly weaker towards the centre. Thus, to ensure sufficient power transfer even when a device is placed in the centre of the enclosure, the power on the primary side must be higher, which results in increased losses and decreased efficiency.

In all of the above scenarios, it is known that a layer/core made of a material of high magnetic permeability (such as ferrite) can be included in the transmitter or receiver to improve the transfer of energy over the magnetic field.

It is an object of the invention to provide a transmitter that produces a magnetic field with improved power transfer characteristics, or to at least provide the public with a useful choice.

### SUMMARY OF THE INVENTION

According to one exemplary embodiment there is provided an inductive power transfer transmitter including: an enclosure having one or more sidewalls for accommodating a device to be energised; a coil in the one or more side walls and wound around a perimeter of the enclosure for generating an alternating magnetic field within the enclosure; and a drive circuit for driving the coil. The coil is arranged so that the number of loops of the coil per unit height varies with height towards the top of the one or more sidewalls.

According to another exemplary embodiment there is provided an inductive power transmitter including: such a coil for generating an alternating magnetic field; a drive circuit for driving the coil; and one or more magnetically permeable layers associated with the coil, wherein the combined thickness of the one or more magnetically permeable layers varies.

It is acknowledged that the terms "comprise", "comprises" and "comprising" may, under varying jurisdictions, be attributed with either an exclusive or an inclusive meaning. For the purpose of this specification, and unless otherwise noted, these terms are intended to have an inclusive meaning - ie they will be taken to mean an inclusion of the listed components which the use directly references, and possibly also of other non-specified components or elements.

Reference to any prior art in this specification does not constitute an admission that such prior art forms part of the common general knowledge.

### BRIEF DESCRIPTION OF THE DRAWINGS

The accompanying drawings, which are incorporated in and constitute part of the specification, illustrate embodiments of the invention and, together with the general description of the invention given above, and the detailed description of embodiments given below, serve to explain the principles of the invention.
- **Figure 1**: shows a view of a transmitter according to an embodiment of a first aspect of the present invention;
- **Figure 2**: shows a view of a transmitter according to another embodiment of the present invention;
- **Figure 3**: shows a cross-sectional view of the transmitter shown in figure 1;
- **Figure 4**: shows a schematic comparing the magnetic field lines generated by two different transmitters;
- **Figure 5**: shows a cross-sectional view of a transmitter according to a second aspect of the present invention;
- **Figure 6**: shows a schematic comparing the magnetic field lines generated by two different transmitters;
- **Figure 7**: shows a cross-sectional view of a transmitter according to a third aspect of the present invention;
- **Figure 8**: shows a schematic comparing the magnetic field lines generated by two different transmitters; and
- **Figure 9**: shows a cross-sectional view of a transmitter according to another embodiment of a third aspect of the present invention.

### DETAILED DESCRIPTION OF EMBODIMENTS OF THE INVENTION

### Coil Arrangement

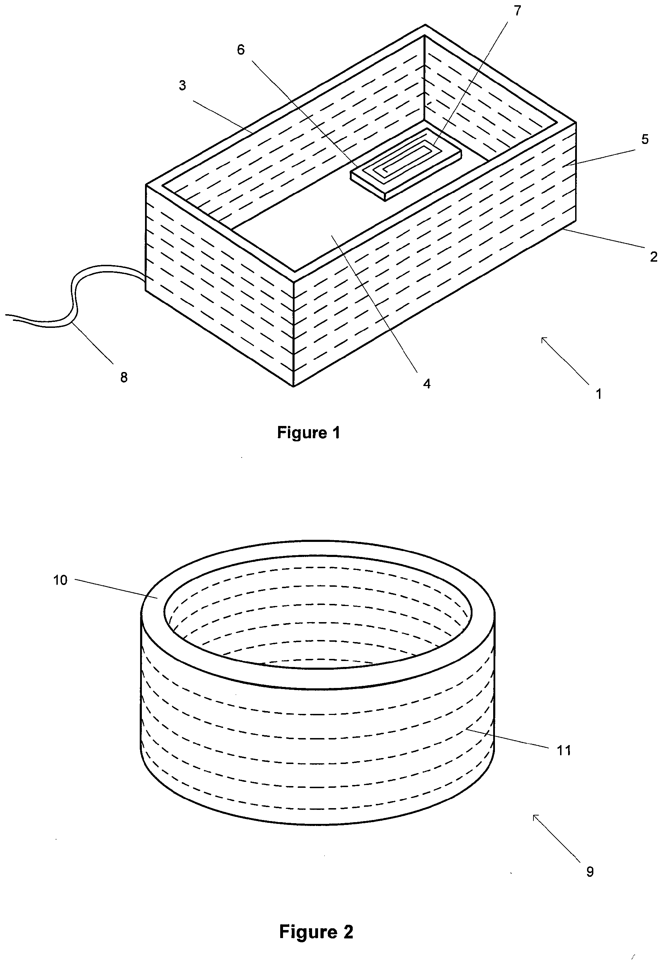

Referring to figure 1, there is shown a transmitter 1 for an IPT system according to an embodiment of the present invention. The transmitter takes the form of a charging enclosure 2 with sidewalls 3 and a base portion 4. The transmitter includes a coil 5 that generates a time-varying magnetic field inside the enclosure. A device 6, placed inside the enclosure, includes a receiver coil 7, which inductively couples with the time-varying magnetic field and produces a current that can be used to charge or power the device. The coil is contained with the sidewalls of the enclosure, and is wound about the perimeter of the enclosure, coplanar with the base portion, as shown by the dashed lines in figure 1.

The transmitter 1 is connected to a suitable power supply 8, and drive circuitry (not shown) is configured to drive the coil so that it generates the magnetic field. The drive circuitry is configured such that the coil 5 generates a time-varying magnetic field appropriate for the particular application. Such drive circuitries are known to those skilled in the art, and the invention is not limited in this respect.

Devices capable of receiving inductively transferred power are well known in the art, and the present invention is not limited to any particular type. In a preferred embodiment, the device includes a receiver coil that is coplanar with the base portion since this will maximise power transfer where the flux of the magnetic field are perpendicular to the base portion.

The shape of the enclosure 2 shown in figure 1 takes the form of a rectangular prism; however the invention is not limited in this respect. Those skilled in the art will appreciate how the present invention can be made to apply to a variety of three-dimensional volumes that define an enclosure. By way of example, figure 2 shows a transmitter 9 where the enclosure is of a cylindrical form, having a single continuous sidewall 10. In this example, the coil 11 is generally circular and is wound around the perimeter of the enclosure, as indicated by the dashed lines in figure 2.

In a preferred embodiment of the invention, the enclosure includes a base portion 4. As will be described later, the inclusion of a magnetically permeable layer (such as a ferrite layer) in the base portion can significantly improve power transfer. However, it is not necessary for the enclosure 2 to include a base portion. Those skilled in the art will appreciate how the present invention can be adapted for charging enclosures that do not include a base portion.

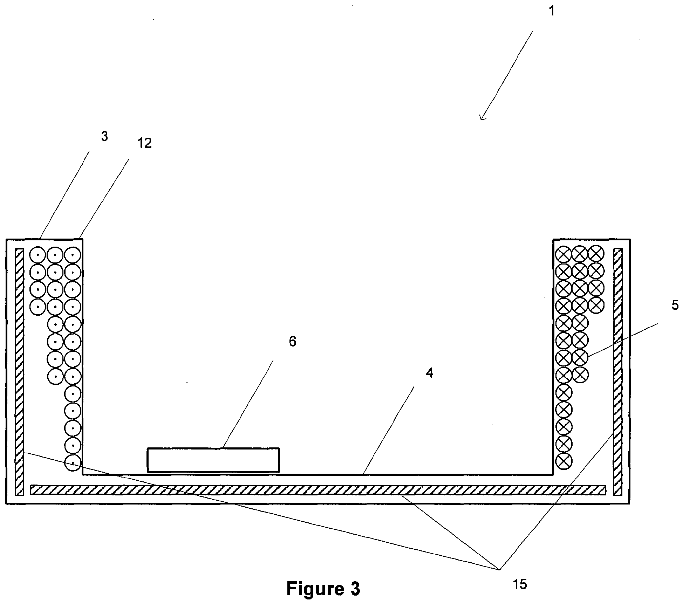

Referring to figure 3, there is shown a vertical cross section of the transmitter 1 shown in figure 1. This view shows the sidewalls 3, base portion 4, coil 5 and device6. The enclosure can optionally include a suitable outer layer 12 (for example a plastic housing) that encloses the inner workings of the transmitter giving the transmitter a more attractive and streamlined appearance. The coil is arranged so that the density of the coil (being the number of loops per unit height) generally increases with height. This results in more loops being 'concentrated' towards the top of the sidewalls. The number of loops shown in figure 3 is relatively few as this best serves to illustrate the principle of the invention. In reality, the number of loops is not limited in any respect, and those skilled in the art will appreciate that in some applications the number of loops can be in the hundreds or even thousands.

Alternatively, in another embodiment of the invention, the coil can be configured so that the density varies with height in some other manner. For example, it is consistent with the present invention for the density of the coil to increase initially with height, then to decrease again towards the top of the side walls.

The coil 5 is continuous and is connected in series to the drive circuitry (not shown). In an embodiment of the invention, the coil is comprised of a single length of wire that is repeatedly wound to form a series of loops. In one embodiment of the invention, the single length of wire comprises sections of wire of varying gauge. The sections of wire can be connected together in a suitable way (for example, soldered) such that the length of wire graduates from the largest diameter through to the narrowest diameter. Thus, if the wire is wound according to the coil configuration shown in figure 3, the narrower sections of the wire correspond to the loops that have a higher density. Since the wire is narrower, it occupies less space than if the wire had a consistent gauge. The wire can be any suitable current carrying wire, including Litz type wire. Litz wire is beneficial because it greatly reduces the power losses caused by skin effect and proximity effect in conductors when operated at high frequencies in IPT systems. In another embodiment of the invention, there is more than one coil. Each coil can be connected in series, parallel or other suitable configuration. Overall, the net density of the coils (being the number of loops per unit height) can still vary in accordance with the present invention.

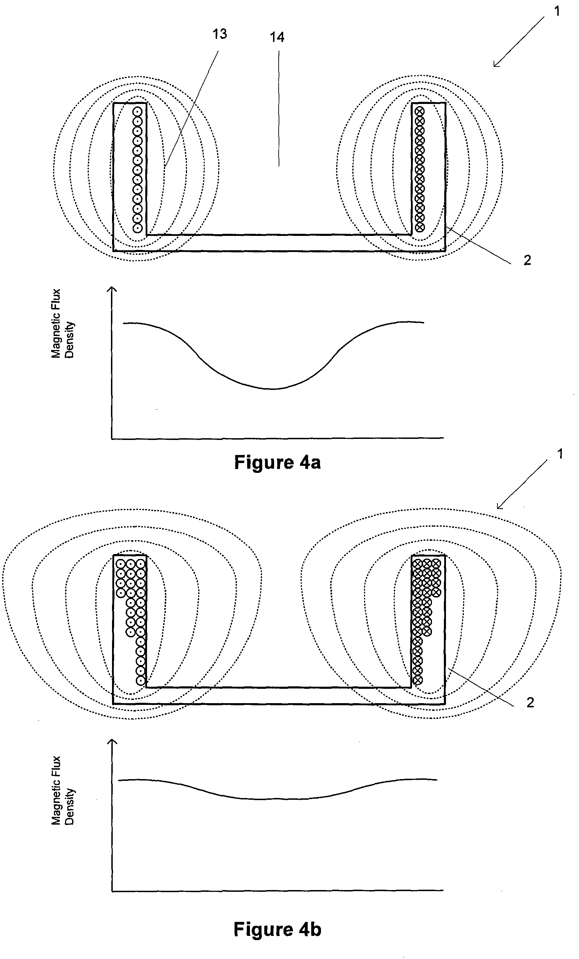

The benefit of the present invention can be seen in figures 4a and 4b, which show a vertical cross-section of a transmitter 1 according to en embodiment of the present invention. Figures 4a and 4b illustrate a comparison between the magnetic fields produced by a coil arrangement with uniform density and a coil arrangement according to the present invention respectively. It will be observed that for the former scenario in figure 4a, the magnetic flux is concentrated towards the walls of the enclosure 13, with there being a region of lower magnetic flux towards the centre 14. Hence, to ensure sufficient power transfer to receivers that are placed in this central region, the power flow through the transmitter must be increased. This results in inefficient use of supply power. Further, receivers that are placed closer to the enclosure side walls are subjected to a stronger magnetic field than those placed at the centre. This requires receivers to regulate their power flow dependent on their precise location within the enclosure. It also increases parasitic heating in the device. Figure 4b demonstrates the magnetic field according to the coil arrangement of the present invention. As will be observed, the variable coil density results in a more uniform magnetic field across the enclosure. Effectively, the additional windings make the magnetic field extend further into the enclosure. This helps resolve the issues arising from the non-uniform field described above. In particular, the power flow through the transmitter can be decreased whilst still ensuring sufficient power transfer to the receiver, regardless of its placement inside the enclosure. Having decreased power flow in the transmitter minimises inefficiencies and lessens parasitic heating. Those skilled in the art will understand that the field shown in figure 4b is qualitative in order to demonstrate the principle of the invention. In practice, the precise coil arrangement that is required to achieve the desired field characteristics is dependent on many variables, such as dimensions and the power rating. It will be appreciated that the design of the coil arrangement will need to be adjusted to suit the particular application.

Returning to figure 3, there is also shown ferrite layers 15 within the sidewalls 3 and base portion 4 of the charging enclosure. Those skilled in the art will appreciate how the inclusion of magnetically permeable layers can improve the performance of the power transfer. Particularly, a magnetically permeable layer in the base portion 'compels' the magnetic field lines to distribute closer to the centre. This helps provide a more uniform field and improve power transfer across the entire base portion area.

Such a charging enclosure does not have to be a free standing apparatus and it could be incorporated into pre-existing structures. By way of example, a desk drawer could be constructed in accordance with the present invention, and thus a user would only need to place their electronic devices in the drawer and they could be recharged or powered.

### Magnetically Permeable Layer - Variable Thickness

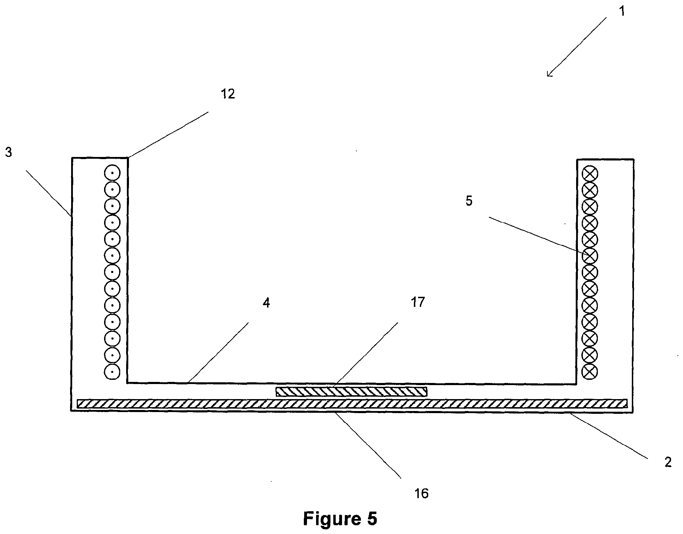

Referring to figure 5, there is shown a cross-section of a transmitter 1 according to another aspect of the present invention. In this instance, the transmitter is a charging enclosure similar to that charging enclosure 2 described above. The enclosure includes sidewalls 3 and a coil 5 that is wound around the perimeter of the enclosure, all housed within a suitable outer layer 12. Included in the base portion 4 is a main magnetically permeable layer 16. As described earlier, including a magnetically permeable layer can improve power transfer by essentially 'reshaping' the magnetic field. Further to this main magnetically permeable layer, there is an additional magnetically permeable layer 17 situated adjacent to the main magnetically permeable layer.

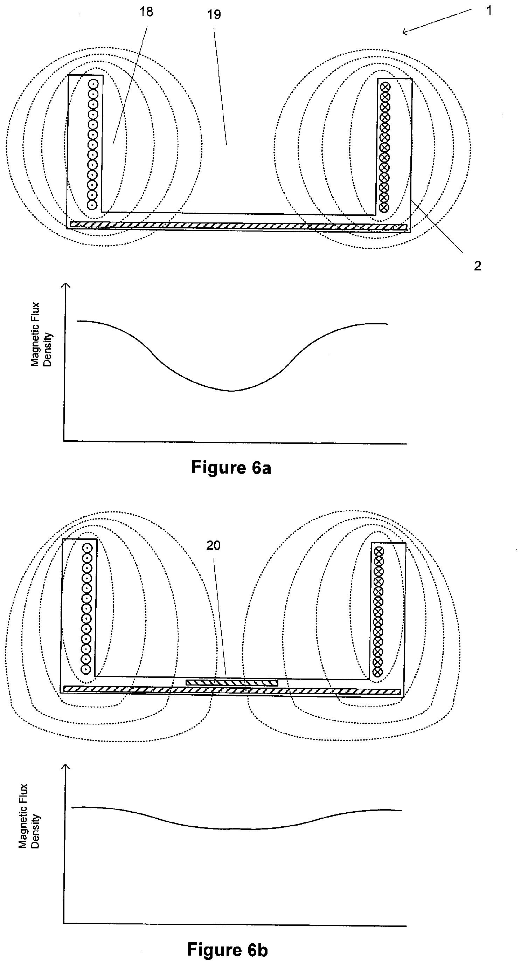

The result of including the additional magnetically permeable layer 17 is to increase the effective thickness of the magnetically permeable layer towards the centre of the charging enclosure 2. In the embodiment of the invention shown in figure 5, this helps improve power transfer by further compelling the magnetic field towards the centre of the charging enclosure, resulting in a more uniform magnetic field. This is demonstrated by a comparison of the magnetic field lines as shown in figures 6a and 6b. It will be observed that for the former scenario in figure 6a, the magnetic flux is concentrated towards the walls of the enclosure 18, with there being a region of lower magnetic flux towards the centre 19. This raises the same problems as that described in relation to figure 4a earlier. Figure 6b demonstrates the magnetic field according to the magnetically permeable layer arrangement of the present invention. As will be observed, the increased thickness of the magnetically permeable layer towards the centre 20 of the enclosure 2 results in a more uniform magnetic field. The mechanism by which this occurs is that the inclusion of the additional magnetically permeable layer raises the height of the magnetically permeable layer, which results in a shorter magnetic path through the air for field lines that pass towards the centre of the enclosure. In effect, the magnetic field is 'attracted' towards the centre. Equivalently, the thicker magnetically permeable layer provides a magnetic path with a longer section of decreased reluctance; hence the magnetic field will be compelled towards this region. The more uniform magnetic field helps resolves the issues arising from the non-uniform field, as described in relation to figures 4a and 4b earlier.

Referring again to figure 5, it is seen that the increase in the effective thickness of the magnetically permeable layer is achieved by including a supplementary block 17. Those skilled in the art will appreciate that the relative size of the supplementary block depends on the scale and dimensions of the particular transmitter. Also, those skilled in the art will appreciate that in some applications it may be suitable to stack a series (ie three or more) of supplementary blocks of decreasing size on top of each other, resulting in a 'step-pyramid' type configuration, wherein the effective thickness varies in a sequence of discrete steps.

In an alternative embodiment of the invention, the magnetically permeable layer may be originally manufactured with a variable thickness. In this instance, the change in thickness may be discrete (as in the 'step-pyramid' configuration) or continuous. Those skilled in the art will appreciate that there are other possible solutions for achieving a variable thickness in a magnetically permeable layer, and the invention is not limited in this respect.

In another embodiment of the invention, the thickness of the magnetically permeable layer may vary in some other manner and not necessarily increase towards the centre of the magnetically permeable layer. For example, in some applications it may be beneficial to have a thicker magnetically permeable layer towards the edges of the particular transmitter.

In a preferred embodiment of the invention, the magnetically permeable layer is a ferrite material. However, those skilled in the art will appreciate that other suitable materials could be used to the same or similar effect. Though the invention has been described in regards to the base portion of a charging enclosure, the invention is not limited to this application. Those skilled in the art will appreciate that in any instance where it is beneficial to include a magnetically permeable layer in a transmitter, it might be possible, and indeed worthwhile, for the thickness of that layer to vary in accordance with the present invention. By way of example, a charging surface that includes a large coil that is coplanar to the surface could benefit from including a magnetically permeable layer that increases in thickness towards the centre of the surface. This would help resolve problems associated with weaker magnetic fields (and less efficient power transfer) towards the centre of such a charging surface.

### Magnetically Permeable Layer - Variable Permeability

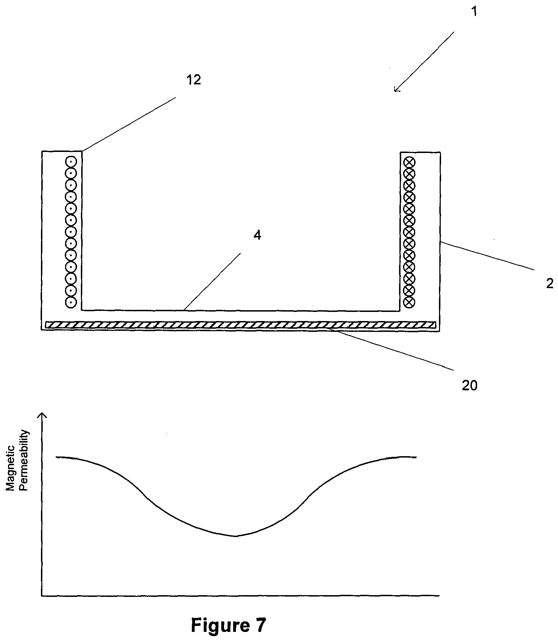

Referring to figure 7, there is shown a cross-section of a transmitter 1 according to another aspect of the present invention. In this instance, the transmitter is a charging enclosure 2 similar to that charging enclosure described previously. The enclosure includes sidewalls 3 and a coil 5 that is wound around the perimeter of the enclosure, all housed within a suitable outer layer 12. Included in the base portion 4 is a magnetically permeable layer 20. As described earlier, including a magnetically permeable layer can improve power transfer by essentially 'reshaping' the magnetic field.

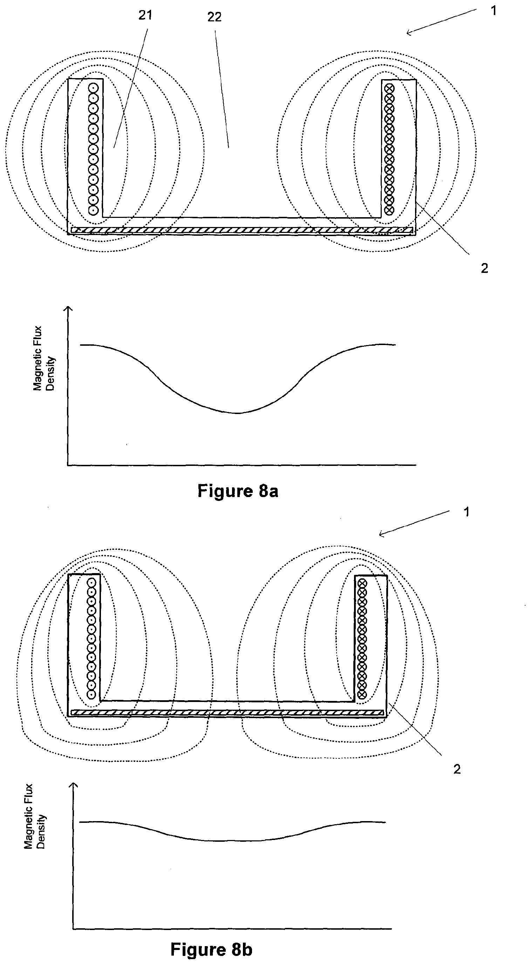

As shown by the corresponding graph in figure 7, the permeability of the magnetically permeable layer 20 varies across the width of the charging enclosure 2, with the permeability being a maximum generally towards the centre of the charging enclosure. In the embodiment of the invention shown in figure 7, this helps improve power transfer by further compelling the magnetic field towards the centre of the charging enclosure, resulting in a more uniform magnetic field. This is demonstrated by a comparison of the magnetic field lines as shown in figures 8a and 8b. It will be observed that for the former scenario in figure 8a, the magnetic flux is concentrated towards the walls of the enclosure 21, with there being a region of lower magnetic flux towards the centre 22. This raises the same problems as that described in relation to figure 4a earlier. Figure 8b demonstrates the magnetic field according to the magnetically permeable layer arrangement of the present invention. As will be observed, the increased permeability of the magnetically permeable layer towards the centre of the enclosure results in a more uniform magnetic field. The mechanism by which this occurs is that the increased permeability of the magnetically permeable layer towards the centre, results in a magnetic path with a section of decreased reluctance, hence the magnetic field will be compelled towards this region. The more uniform magnetic field helps resolves the issues arising from the non-uniform field, as described in relation to figures 4a and 4b earlier.

Referring again to figure 7, it is seen that the magnetically permeable layer 20 is of constant thickness, but the permeability varies in a continuous manner. In one embodiment of the invention, the magnetically permeable layer could be originally manufactured with such a continuous variation in its magnetic permeability properties. In another embodiment, the magnetically permeable layer could be originally manufactured with discrete variations in its magnetic permeability properties.

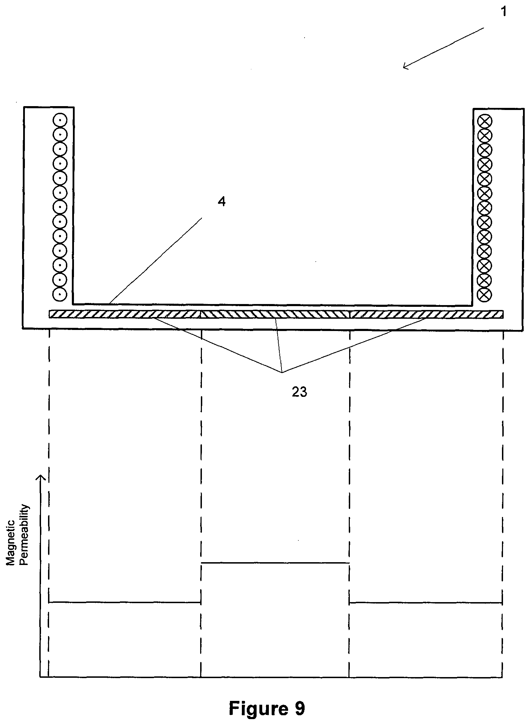

Referring to figure 9, there is shown another embodiment of a transmitter 1 according to the present invention, including several sections of magnetically permeable layer 23 arranged next to each other within the base portion 4. In this instance, the magnetic permeability of each section could have a different magnitude, resulting in the variation in magnetic permeability shown in the accompanying graph. In the case of an enclosure according to one embodiment of the present invention, such sections could be made from concentric rings of magnetically permeable material.

In another embodiment of the invention, the permeability of the magnetically permeable layer may vary in some other manner and not necessarily increase towards the centre of the magnetically permeable layer. For example, in some applications it may be beneficial to have a magnetically permeable layer with higher permeability towards the edges of the particular transmitter.

In a preferred embodiment of the invention, the magnetically permeable layer is a ferrite material. However, those skilled in the art will appreciate that other suitable materials could be used to the same or similar effect.

Though the invention has been described in regards to the base portion of a charging enclosure, the invention is not limited to this application. Those skilled in the art will appreciate that in any instance where it is beneficial to include a magnetically permeable layer in a transmitter, it might be possible, and indeed worthwhile, for the permeability of that layer to vary in accordance with the present invention. By way of example, a charging surface that includes a large coil that is coplanar to the surface could benefit from including a magnetically permeable layer that increases in permeability towards the centre of the surface. This would help resolve problems associated with weaker magnetic fields (and less efficient power transfer) towards the centre of such charging surfaces.

### Combination

There have been described three separate aspects of the transmitter according to the present invention, namely: a variable coil density; a variable thickness of the magnetically permeable layer; and a variable permeability of the magnetically permeable layer. Those skilled in the art will appreciate that any of these three aspects can be combined in any number of ways. For example, for certain charging enclosures it may be worthwhile to have increased coil density towards the top of the enclosure and a base portion that includes a magnetically permeable layer that increases in magnetic permeability towards the centre of the base portion. In another example, a charging surface may include a magnetically permeable layer wherein the thickness and the magnetic permeability of the layer progressively increase towards the centre of the charging surface.

There are thus provided a transmitter arrangement for an IPT system that results in generating a magnetic field that is more uniform. Since the field is more uniform, the quality of the coupling between the transmitter and the receiver is improved, and less power is needed to power or charge the device, resulting in a more efficient IPT system. Further, since the required current to power the devices decreases, there are fewer losses due to parasitic heating in the devices placed near or on the transmitter.

While the present invention has been illustrated by the description of the embodiments thereof, and while the embodiments have been described in detail, it is not the intention of the Applicant to restrict or in any way limit the scope of the appended claims to such detail. Additional advantages and modifications will readily appear to those skilled in the art. Therefore, the invention in its broader aspects is not limited to the specific details, representative apparatus and method, and illustrative examples shown and described. Accordingly, departures may be made from such details without departure from the scope of the Applicant's general inventive concept.

## Claims

1. An inductive power transfer transmitter (1) including:
a. an enclosure (13) having one or more side walls (3) for accommodating a device (6) comprising a receiver coil to be energised;
b. a coil (5) in the one or more side walls (3) and wound around a perimeter of the enclosure (13) for generating an alternating magnetic field within the enclosure (13); and
c. a drive circuit for driving the coil (5),
**characterised in that** the coil (5) is arranged so that the number of loops of the coil (5) per unit height varies with height towards the top of the one or more sidewalls (3).

2. An inductive power transfer transmitter (1) as claimed in claim 1, wherein the coil (5) is generally wound to correspond to the perimeter of the enclosure (13).

3. An inductive power transfer transmitter (1) as claimed in claim 2, wherein the number of loops per unit height of the coil (5) is generally higher in one half of the one or more side walls (3).

4. An inductive power transfer transmitter (1) as claimed in claim 2, wherein the enclosure (13) includes a base portion (4), from which the one or more side walls (3) extend.

5. An inductive power transfer transmitter (1) as claimed in claim 1, wherein the number of loops per unit height of the coil (5) increases with height towards the top of the one or more side walls (3).

6. An inductive power transfer transmitter (1) as claimed in claim 4, wherein the base portion (4) includes a magnetically permeable layer (16).

7. An inductive power transfer transmitter (1) as claimed in claim 6, wherein the coil (5) is made of wire that decreases in gauge.

8. An inductive power transfer transmitter (1) as claimed in claim 7, wherein the coil (5) is made of Litz wire.

9. An inductive power transmitter (1) as claimed in claim 1, further including:
one or more magnetically permeable layers (16,17) associated with the coil (5), wherein the combined thickness of the one or more magnetically permeable layers varies.

10. An inductive power transmitter (1) as claimed in claim 9, wherein the one or more magnetically permeable layers includes at least two magnetically permeable layers (16, 17) having different dimensions, such that the combined thickness of the at least two magnetically permeable layers (16, 17) when placed together is not uniform.

11. The inductive power transmitter (1) as claimed in claim 9, wherein the combined thickness of the one or more magnetically permeable layers (16, 17) generally increases towards the centre of the base portion (4).

12. An inductive power transmitter (1) as claimed in claim 1 or claim 9 further including:
one or more magnetically permeable layers (16,17) associated with the coil (5), wherein the permeability of at least some of the one or more magnetically permeable layers (16, 17) varies.

13. An inductive power transmitter (1) as claimed in claim 12, wherein the one or more magnetically permeable layers includes at least two magnetically permeable layers (16, 17) having different magnetic permeability.

14. The inductive power transmitter (1) as claimed in claim 13, wherein the permeability of the one or more magnetically permeable layers (16, 17) generally increases towards the centre of a base portion (4) of the enclosure (13).

15. The inductive power transmitter (1) as claimed in claims 9 to 14, wherein the one or more magnetically permeable layers (16, 17) are made of a ferrite material.

## Patentansprüche

1. Induktiver Energieübertragungssender (1) beinhaltend:
a) Eine Umfassung (13), die eine oder mehrere Seitenwände (3) zum Unterbringen einer Vorrichtung (6) hat, die eine Empfängerspule umfasst, die unter Strom gesetzt werden soll;
b) Eine Spule (5) in der einen oder mehreren Seitenwänden (3) und die um einen Durchmesser der Umfassung (13) gewickelt ist zum Erzeugen und Verändern von magnetischem Feld innerhalb der Umfassung (13); und
c) einen Ansteuerstromkreis zum Ansteuern der Spule (5), gekennzeichnet darin, dass die Spule (5) angeordnet ist, sodass die Zahl der Wicklungen der Spule (5) pro Höheneinheit sich mit Höhe zur Oberseite der einen oder mehreren Seitenwände (3) verändert.

2. Induktiver Energieübertragungssender (1) nach Anspruch 1, wobei die Spule (5) allgemein gewickelt ist, um dem Durchmesser der Umfassung (13) zu entsprechen.

3. Induktiver Energieübertragungssender (1) nach Anspruch 2, wobei die Wicklungszahl pro Höheneinheit der Spule (5) allgemein in einer Hälfte der einen oder mehreren Seitenwände (3) höher ist.

4. Induktiver Energieübertragungssender (1) nach Anspruch 2, wobei die Umfassung (13) ein Basisstück (4) beinhaltet, von dem aus sich die eine oder mehrere Seitenwände (3) erstrecken.

5. Induktiver Energieübertragungssender (1) nach Anspruch 1, wobei die Wicklungszahl pro Höheneinheit der Spule (5) pro Höheneinheit mit Höhe zur Oberseite der einen oder mehreren Seitenwände (3) zunimmt.

6. Induktiver Energieübertragungssender (1) nach Anspruch 4, wobei das Basisstück (4) eine magnetisch permeable Schicht (16) beinhaltet.

7. Induktiver Energieübertragungssender (1) nach Anspruch 6, wobei die Spule (5) aus Draht ist, der in Dicke abnimmt.

8. Induktiver Energieübertragungssender (1) nach Anspruch 7, wobei die Spule (5) aus Litzendraht ist.

9. Induktiver Energieübertragungssender (1) nach Anspruch 1 ferner beinhaltend:
Eine oder mehrere magnetisch permeable Schichten (16, 17) zugehörig zu der Spule (5), wobei die kombinierte Dicke der einen oder mehreren magnetisch permeablen Schichten variiert.

10. Induktiver Energieübertragungssender (1) nach Anspruch 9, wobei die eine oder mehrere magnetisch permeablen Schichten mindestens zwei magnetisch permeable Schichten (16, 17) beinhalten, die verschiedene Dimensionen aufweisen, sodass die kombinierte Dicke der mindestens zwei magnetisch permeablen Schichten (16, 17) nicht gleich ist, wenn sie zusammen platziert werden.

11. Induktiver Energieübertragungssender (1) nach Anspruch 9, wobei die kombinierte Dicke der einen oder mehreren magnetisch permeablen Schichten (16, 17) allgemein zum Zentrum des Basisstücks (4) zunimmt.

12. Induktiver Energieübertragungssender (1) nach Anspruch 1 oder Anspruch 9 ferner beinhaltend:
Eine oder mehrere magnetisch permeable Schichten (16, 17) zugehörig zur Spule (5), wobei die Permeabilität von mindestens ein paar der einen oder mehreren magnetisch permeablen Schichten (16, 17) sich verändert.

13. Induktiver Energieübertragungssender (1) nach Anspruch 12, wobei die eine oder mehrere magnetisch permeablen Schichten mindestens zwei magnetisch permeable Schichten (16, 17) aufweisen, die verschiedene magnetische Permeabilitäten aufweisen.

14. Induktiver Energieübertragungssender (1) nach Anspruch 13, wobei die Permeabilität der einen oder mehreren magnetisch permeablen Schichten (16, 17) allgemein zum Zentrum des Basisstücks (4) der Umfassung (13) zunimmt.

15. Induktiver Energieübertragungssender (1) nach Ansprüchen 9 bis 14, wobei die eine oder mehrere magnetisch permeablen Schichten (16, 17) aus Ferritmaterial gemacht sind.

## Revendications

1. Un émetteur de transfert d'alimentation par induction (1) comprenant :
a. une enceinte (13) avec une ou plusieurs parois latérales (3) pour loger un dispositif (6) comprenant une bobine réceptrice à exciter ;
b. une bobine (5) dans les une ou plusieurs parois (3) et enroulée autour d'un périmètre de l'enceinte (13) pour la génération d'un champ magnétique alternatif au sein de l'enceinte (13) ; et
c. un circuit de pilotage pour le pilotage de la bobine (5),
**caractérisé en ce que** la bobine (5) est agencée de telle sorte que le nombre de spires de la bobine (5) par unité de hauteur varie en fonction de la hauteur en allant vers le haut des une ou plusieurs parois latérales (3).

2. Un émetteur de transfert d'alimentation par induction (1) tel que revendiqué dans la revendication 1, dans lequel la bobine (5) est globalement enroulée de manière à correspondre au périmètre de l'enceinte (13).

3. Un émetteur de transfert d'alimentation par induction (1) tel que revendiqué dans la revendication 2, dans lequel le nombre de spires par unité de hauteur de la bobine (5) est globalement plus élevé dans une moitié des une ou plusieurs parois latérales (3).

4. Un émetteur de transfert d'alimentation par induction (1) tel que revendiqué dans la revendication 2, dans lequel l'enceinte (13) comprend une partie de base (4), à partir de laquelle s'étendent les une ou plusieurs parois latérales (3).

5. Un émetteur de transfert d'alimentation par induction (1) tel que revendiqué dans la revendication 1, dans lequel le nombre de spires par unité de hauteur de la bobine (5) augmente avec la hauteur en allant vers le haut des une ou plusieurs parois latérales (3).

6. Un émetteur de transfert d'alimentation par induction (1) tel que revendiqué dans la revendication 4, dans lequel la partie de base (4) comprend une couche magnétiquement perméable (16).

7. Un émetteur de transfert d'alimentation par induction (1) tel que revendiqué dans la revendication 6, dans lequel la bobine (5) est réalisée en un fil dont le calibre diminue.

8. Un émetteur de transfert d'alimentation par induction (1) tel que revendiqué dans la revendication 7, dans lequel la bobine (5) est réalisée en fil de Litz.

9. Un émetteur d'alimentation par induction (1) tel que revendiqué dans la revendication 1, comprenant en outre :
une ou plusieurs couches magnétiquement perméables (16, 17) associées à la bobine (5), l'épaisseur combinée des une ou plusieurs couches magnétiquement perméables étant variable.

10. Un émetteur d'alimentation par induction (1) tel que revendiqué dans la revendication 9, dans lequel les une ou plusieurs couches magnétiquement perméables comprennent au moins deux couches magnétiquement perméables (16, 17) ayant des dimensions différentes, de telle sorte que l'épaisseur combinée des au moins deux couches magnétiquement perméables (16, 17) ne soit pas uniforme lorsqu'elles sont placées l'une avec l'autre.

11. Un émetteur d'alimentation par induction (1) tel que revendiqué dans la revendication 9, dans lequel l'épaisseur combinée des une ou plusieurs couches magnétiquement perméables (16, 17) augmente globalement en allant vers le centre de la partie de base (4).

12. Un émetteur d'alimentation par induction (1) tel que revendiqué dans la revendication 1 ou la revendication 9, comprenant en outre :
une ou plusieurs couches magnétiquement perméables (16, 17) associées à la bobine (5), la perméabilité d'au moins certaines des une ou plusieurs couches magnétiquement perméables (16, 17) étant variable.

13. Un émetteur d'alimentation par induction (1) tel que revendiqué dans la revendication 12, dans lequel les une ou plusieurs couches magnétiquement perméables comprennent au moins deux couches magnétiquement perméables (16, 17) ayant des perméabilités magnétiques différentes.

14. L'émetteur d'alimentation par induction (1) tel que revendiqué dans la revendication 13, dans lequel la perméabilité des une ou plusieurs couches magnétiquement perméables (16, 17) augmente globalement en allant vers le centre d'une partie de base (4) de l'enceinte (13).

15. L'émetteur d'alimentation par induction (1) tel que revendiqué dans les revendications 9 à 14, dans lequel les une ou plusieurs couches magnétiquement perméables (16, 17) sont réalisées en un matériau de ferrite.
